# EUROPÄISCHE PATENTSCHRIFT

(11) **EP 1 104 569 B1**
(45) Veröffentlichungstag und Bekanntmachung des Hinweises auf die Patenterteilung: **25.09.2002**
(21) Anmeldenummer: 99929047.1
(22) Anmeldetag: 29.04.1999
(51) Int. Cl.: G06K 9/00, B07C 3/00

(54) **VERFAHREN UND VORRICHTUNG ZUM BEARBEITEN VON AN DEN ABSENDER ZURÜCKZUSCHICKENDEN SENDUNGEN**
METHOD AND DEVICE FOR PROCESSING MAIL TO BE RETURNED TO SENDER
PROCEDE ET DISPOSITIF POUR LE TRAITEMENT D'ENVOIS A RENVOYER A L'EXPEDITEUR

(30) Priorität: 13.08.1998 DE 19836767
(43) Veröffentlichungstag der Anmeldung: 06.06.2001
(73) Patentinhaber: SIEMENS AKTIENGESELLSCHAFT, 80333 München (DE)
(72) Erfinder: ROSENBAUM, Walter, F-75116 Paris (FR); PFEIFFER, Frank, D-78467 Konstanz (DE)
(86) Internationale Anmeldenummer: DE9901261
(87) Internationale Veröffentlichungsnummer: WO00010113

(56) Entgegenhaltungen:
- DE-A- 19 644 163
- US-A- 5 315 668
- YUNLONG SHENG ET AL: "INVARIANT PATTERN RECOGNITION USING FOURIER-MELLIN TRANSFORMS AND NEURAL NETWORKS" JOURNAL OF OPTICS, Bd. 22, Nr. 5, 1. September 1991 (1991-09-01), Seiten 223-228, XP000249346 ISSN: 0150-536X

## Beschreibung

Die Erfindung betrifft ein Verfahren und eine Vorrichtung zum Bearbeiten von an den Absender zurückzuschickende Sendungen gemäß der Oberbegriffe der unabhängigen Ansprüche.

Die Rücksendung von Sendungen an den Absender ist notwendig, wenn die Sendung dem Empfänger nicht zugestellt werden kann, eine Weiterleitung nicht möglich ist, z.B. weil die neue Adresse nicht bekannt ist oder der Absender verfügt hat, daß bei Unzustellbarkeit die Sendung an ihn zurückgeschickt wird.

Die Ermittlung der an den Absender zurückzuschickenden Sendung ist bekannter Stand der Technik. Ist der Empfänger unter der angegebenen Adresse nicht bekannt, eine neue Adresse ist ebenfalls unbekannt, so erhält die Sendung vom Zusteller einen automatisch erkennbaren Rücksendestempel. Befindet sich auf der Sendung eine Verfügung: "Nicht weiterleiten, zurück an den Absender", so wird bei Nichtzustellbarkeit der Rücksendestempel sofort ohne Überprüfung in einer Weiterleitungsdatei aufgebracht. Wird bei der automatischen Bearbeitung durch den OCR-Leser eine Rücksendeverfügung erkannt und ergibt der Lernprozeß der Empfängeradresse einschließlich Adreßinterpretation, daß unter der angegebenen Adresse der Empfänger nicht bekannt ist, so wird diese Sendung in die Kategorie der an den Absender zurückzuschickenden Sendungen eingeordnet. Dies geschieht auch bei Erkennung des Rücksendestempels.

Diese Sendungen, die an den Absender zurückgeschickt werden, nehmen ständig zu und dieser Service der Postdienste dient den Großkunden, z.B. Versandhäusern, dazu, ihre Adreßlisten zu aktualisieren.

Diese Aufgabe scheint auf den ersten Blick gegenüber der Weiterleitung einfacher automatisch lösbar, da sich die Rücksendevergütung lesbar auf der Sendung befindet und nicht wie bei der Weiterleitung eine Datenbank extra durchsucht werden muß. In der Praxis zeigt sich aber, daß die Absenderdaten weit weniger durch den OCR-Leser eindeutig erkannt werden, so daß dann eine Videocodierung notwendig wird. Dafür können folgende Ursachen genannt werden:
1. Die Lokalisation der Absenderdaten auf der Sendung erfolgt in erster Linie nach ästhetischen Gesichtspunkten bei jedem Absender unterschiedlich.
2. Insbesondere Großkunden verwenden spezielle Logos, besondere Schriftarten(z.B. wie gebundene Handschrift), u.a. zu Werbezwecken als eingetragene Marken, die durch automatische OCR-Leser nur in geringem Umfang eindeutig identifiziert werden können.
3. Oft werden weitere Angaben, wie Tel.-Nr. oder Fax-Nr. gemacht, die in den zur Adreßerkennung entwickelten Auswertealgorithmen zur Nichterkennung/Zurückweisung führt.

Um eine möglichst weitgehende online-Bearbeitung von weiterzuleitenden, einschließlich rückzuschickenden Sendungen zu erzielen, wird in DE 196 44 163 A1 ein Verfahren beschrieben, bei welchem weiterzuleitende Sendungen bei der Videocodierung priorisiert bearbeitet werden. Mit dieser priorisierten Bearbeitung kann aber das oben beschriebene Problem bei Großkunden mit einer großen Zahl an den Absender zurückzuschickenden Sendungen, deren Absenderaufschriften maschinell schlecht lesbar sind, nicht gelöst werden.

Der in den unabhängigen Ansprüchen angegebenen Erfindung liegt deshalb die Aufgabe zugrunde, ein Verfahren und eine Vorrichtung zum Bearbeiten von an den Absender zurückzuschickenden Sendungen zu schaffen, mit denen der Videocodieraufwand bei zahlreichen zurückzuschickenden Sendungen von Großkunden, wie z.B. Versandhäusern stark reduziert wird, so daß eine online-Bearbeitung möglich wird.

Da jeder Großkunde seine Absenderangaben auf seinen vielen Sendungen einheitlich gestaltet, geht die Erfindung von dem Gedanken aus, die Absenderangaben auf der Bildebene automatisch nach Ähnlichkeiten zu vergleichen und ab einem bestimmten Ähnlichkeitsmaß die Sendungen einem einzigen Absender zuzuordnen. Hat man diese Zuordnung, so ist es nur noch notwendig, eine einzige dieser Sendungen hinsichtlich der Absenderdaten zu videocodieren. Somit kann der zeitaufwendige manuelle Aufwand stark reduziert werden und die vielen Rücksendungen dieser Großkunden können online verarbeitet (sortiert) werden, obwohl ein automatisches OCR-Lesen der Absenderangaben nicht möglich ist. Dieses wird am günstigsten realisiert, indem die Rücksendungen mit nicht automatisch lesbaren Absenderangaben, die keine definierte Ähnlichkeiten der Bilder der Absendergebiete zu schon videocodierten Sendungen aufweisen, sofort videocodiert werden und die Ergebnisse zusammen abgespeichert werden, um die nächsten Rücksendungen damit zu vergleichen, und die Sendungen mit den ähnlichen Abbildern der Absendergebiete dem codierten Absender zuzuordnen.

Natürlich ist es auch möglich, die zurückzuschickenden Sendungen zuerst auf der Bildebene nach Ähnlichkeiten bei den Absenderangaben zu untersuchen, entsprechend der Ähnlichkeiten zu sortieren und anschließend von jedem Stapel nur von einer Sendung die Videocodierung durchzuführen.

Vorteilhafte Ausführungen der Erfindung sind in den Unteransprüchen dargestellt.

Anschließend wird die Erfindung in einem Ausführungsbeispiel anhand der Zeichnungen näher erläutert.
Dabei zeigt
- FIG 1: einen schematischen Ablauf der Verarbeitung von an den Absender zurückzuschickenden Sendungen
- FIG 2: einen Ablaufplan für die weitgehende online-Bearbeitung von an den Absender zurückzuschickenden Sendungen

Die Entscheidung "zurück an den Absender" kann auf verschiedene Weise entstehen:
1. Auf der Sendung befindet sich eine Verfügung des Absenders in Form eines Aufdruckes: "Falls nicht zustellbar, zurück an den Absender". Wird bei der Adreßinterpretation festgestellt, daß der Empfänger unter der angegebenen Adresse in der betreffenden Adreßdatei nicht vorhanden ist, so wird die Entscheidung getroffen, die Sendung zurückzuschicken.
2. Nach Ermittlung und Codierung der Empfängeradresse stellt der Zusteller fest, daß der Empfänger unter der Adresse nicht wohnhaft ist und eine Weiterleitungsverfügung nicht besteht, oder daß der Empfänger die Annahme verweigert. In diesen Fällen bringt er einen Rücksendestempel auf das Empfängeradreßgebiet auf. Befindet sich auf der Sendung zusätzlich eine Rücksendeverfügung des Absenders, so erfolgt keine Überprüfung, ob der Empfänger verzogen ist und/oder eine Weiterleitungsverfügung besteht.

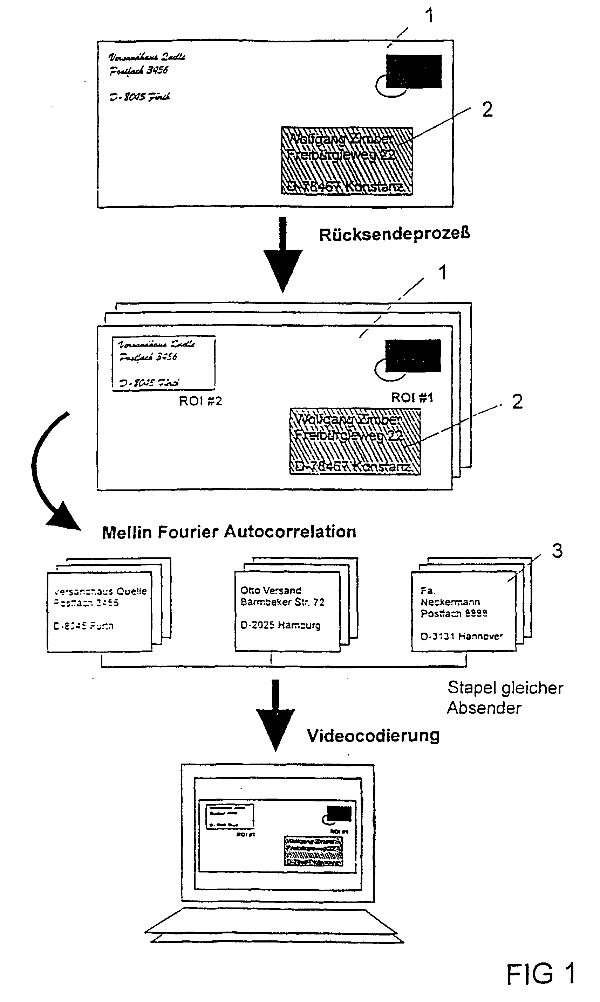

In der FIG 1 ist beispielhaft eine Sendung 1 des Versandhauses Quelle dargestellt, die an den Empfänger nicht zugestellt werden konnte und deswegen vom Zusteller mit einem Rücksendestempel 2 versehen wurde. Diese Sendung 1 wird beim Rücksendeprozeß wie eine neue Sendung in den Verteilprozeß einbezogen. Als erstes wird also ein Abbild von der Sendungsoberfläche aufgenommen, es werden interessierende Gebiete ermitteltund es erfolgt eine Klassifikation der Gebiete. Dabei wird in diesem Fall das Gebiet mit den Empfängerdaten ROI 1 und der Rücksendestempel 2 in diesem Gebiet ermittelt. Aufgrund der Rücksendeentscheidung wird das Gebiet mit den Absenderdaten ROI 2 auf der Bildebene mit den gespeicherten Abbildern der Empfängergebiete ROI 2 schon vorher bearbeiteter zurückzuschickender Sendungen verglichen hinsichtlich ihrer Ähnlichkeiten.

Dafür kommen an sich bekannte Verfahren der Bildverarbeitung und -erkennung zum Einsatz. Entsprechende Methoden sind in
1. P. Suda et al: Logo and Word Matching. Using a General Approach to Signal Registration, 4^{th} International Conference of Document Analysis and Recognition (ICDAR), Ulm, 1997.
2. A. Rosenfeld and A. Katz: Digital Picture Processing, Academic, chapter 8.3, New York, 1976.
3. Robert J. Schalkoff: Digital Image Processing and Computer Vision, John Wiley & Sons, 1989.
näher dargestellt.
Als besonders vorteilhaft erweist sich die Kombination von Mellin-Fouriertransformation bei der Auto-Correlation "Mellin-Fourier-Autocorrelation" (siehe Pkt. 3, S.281-286), da es sich hierbei um einen allgemeinen systematischen Ansatz handelt, der leicht adaptierbar und erweiterbar ist.
Die an die Absender zurückzuschickenden Sendungen, deren Absendergebietsbilder vereinbarte Ähnlichkeitsmaße auf der Grundlage der Mellin-Fourier-Autocorrelation aufweisen, werden dann in entsprechenden Sendungsstapeln 3 zusammengefaßt. Von jedem Sendungsstapel wird dann z.B. am Ende eines Tages nur das Absenderadreßgebiet einer Sendung videocodiert und die übrigen Sendungen dieses Stapels werden dann dieser erkannten und codierten Absenderadresse zugeordnet und zur Versendung an diese Adresse sortiert.

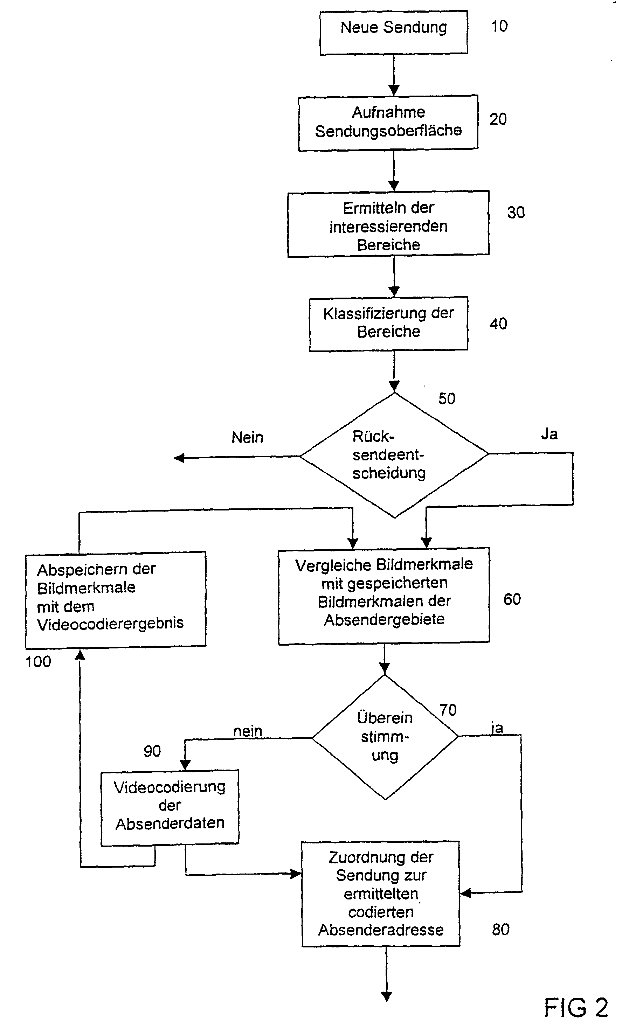

Um eine möglichst weitgehende online-Verarbeitbarkeit zu erreichen, ist der in FIG 2 dargelegte Ablauf besonders vorteilhaft.
Die einkommenden und in eine Sortiermaschine geladenen Sendungen werden als erstes vereinzelt. Von den jeweiligen vereinzelten neuen Sendungen 10 werden in einer Leseeinrichtung die Sendungsoberflächen mit den Verteilinformationen aufgenommen 20 und die interessierenden Bereiche ROI ermittelt 30. Dann erfolgt die Klassifikation dieser Bereiche 40, d.h. welcher Bereich ist der Empfängerbereich, der Absenderbereich, der Briefmarkenbereich, der Bereich mit Absenderverfügungen, der Rücksendestempelbereich. Anschließend wird die Rücksendeentscheidung getroffen 50. Soll die Sendung zurückgeschickt werden, werden Bildmerkmale des Gebietes mit den Absenderdaten mit abgespeicherten Bildmerkmalen hinsichtlich ihrer Ähnlichkeit, z.B. mittels Mellin-Fourier-Autocorrelation verglichen 60. Ist keine Ähnlichkeit im vereinbarten Umfang vorhanden 70 oder sind noch keine Bildmerkmale gespeichert 100, wird das Abbild des Absendergebietes videocodiert 90 und das Codierergebniss wird mit den Bildmerkmalen abgespeichert 100. Die entsprechende Sendung wird dann dem Videocodierergebnis zugeordnet 80 und kann somit an den Absender verteilt werden. Wird bei dem Merkmalsvergleich 70 die vereinbarte Ähnlichkeit mit den gespeicherten Bildmerkmalen einer der schon videocodierten Sendungen festgestellt, so wird die neue Sendung dieser codierten Absenderadresse ohne zusätzliche Videocodierung zugeordnet. Besonders günstig ist es, die Bereiche mit den Absenderdaten von bekannten Großkunden vor der Bearbeitung der Sendungen zu videocodieren und die Ergebnisse mit den Merkmalen der Bilder dieser Bereiche, die für die Ähnlichkeitsanalyse herangezogen werden, in ener Rücksendedatei abzuspeichern, die im Laufe der Bearbeitung der an den Absender zurückzuschickenden Sendungen ständig aktualisiert wird.

## Patentansprüche

1. Verfahren zum Bearbeiten von an den Absender zurückzuschickenden Sendungen (1) mit Aufnahme (20) und Speicherung der Abbilder der mit den Verteilinformationen versehenen Sendungsoberflächen und Ermittlung (30) mindestens der die Absenderadresse enthaltenden Bereiche (2), **dadurch gekennzeichnet, daß** Ähnlichkeiten der die Absenderadressen enthaltenden Bereiche auf der Bildebene ermittelt werden, daß von den Sendungen, deren Ähnlichkeiten der Adreßgebietsbilder ein festgelegtes Ähnlichkeitsmaß aufweisen, nur ein Abbild einer Sendung videocodiert wird und die übrigen dieser Sendungen dem ermittelten Absender zugeordnet (80) werden.

2. Verfahren nach Anspruch 1, **dadurch gekennzeichnet, daß** die Ähnlichkeiten der Absenderadreßbilder mittels Mellin-Fourier-Autocorrelation ermittelt werden.

3. Verfahren nach Anspruch 1 oder 2, **dadurch gekennzeichnet, daß** die Bereiche mit den Absenderdaten der Sendungen von bekannten Großkunden vor der Sendungsbearbeitung videocodiert werden und zusammen mit ermittelten Merkmalen der dazugehörigen Bilder, die zur Ähnlichkeitsanalyse herangezogen werden, in einer Rücksendedatei abgespeichert werden, die bei der Bearbeitung der an die Absender zurückzuschickenden Sendungen aktualisiert wird.

4. Verfahren nach einem der Ansprüche 1 bis 3, **dadurch gekennzeichnet, daß** jede an den Absender zurückzuschickende Sendung, deren Absenderadresse nicht automatisch eindeutig gelesen werden kann, dahingehend überprüft wird, ob die für die Ähnlichkeitsanalyse herangezogenen Merkmale des Abbildes des die Absenderdaten enthaltenden Bereiches mit den entsprechenden gespeicherten Merkmalen des Abbildes des die Absenderdaten enthaltenden Bereiches einer Sendung, deren Absenderadresse schon videocodiert wurde, das festgelegte Ähnlichkeitsmaß aufweist, wenn dieses Ähnlichkeitsmaß vorhanden ist, diese Sendung der schon videocodierten Absenderadresse zugeordnet wird, und wenn das festgelegte Ähnlichkeitsmaß nicht vorhanden ist, diese Sendung ebenfalls videocodiert wird und die für die Ähnlichkeitsanalyse herangezogenen Merkmale des Abbildes des Bereiches mit den Absenderdaten zusammen mit dem Ergebnis der Videocodierung abgespeichert wird.

5. Verfahren nach Anspruch 1 bis 4, bei dem die Sendungen ID-Kennzeichen erhalten und die Abbilder der Sendungen unter den dazugehörenden ID-Kennzeichen abgespeichert werden, **dadurch gekennzeichnet, daß** die für die Ähnlichkeitsanalyse herangezogenen Merkmale des Bereiches der Absenderdaten zusammen mit dem Ergebnis der Videocodierung unter dem jeweiligen ID-Kennzeichen abgespeichert werden.

6. Vorrichtung zum Bearbeiten von an den Absender zurückzuschickenden Sendungen (1) mit einer Vorrichtung zur Erzeugung (20) und Speicherung von Abbildern von Sendungen, einer OCR-Lesevorrichtung zur automatischen Auswertung der Ermittlung (30) der interessierenden Bereiche, wie Absenderadresse, Empfängeradresse, Rücksendeaufschriften oder -stempel, anhand der gespeicherten Abbilder mit Ergebnisüberprüfungen in einer Namen-Adreß-Datenbank und einer Rücksendedatei, einer Vorrichtung zur Videocodierung der Abbilder oder der interessierenden Bereiche der Sendungen mit Ergebnisüberprüfungen, die mindestens einen Videocodierplatz aufweist, einem Imagecontroller zur Steuerung des Datenflusses zwischen der OCR-Lesevorrichtung und der Vorrichtung zur Videocodierung, der bei nicht eindeutig gelesenen Absenderadressen die entsprechenden Abbilder der Sendungen oder nur der entsprechenden Absenderadreßgebiete der Vorrichtung zur Videocodierung zuführt, und der die Videocodierergebnisse zur Abspeicherung mit dem dazugehörigen Abbild der OCR-Lesevorrichtung zuführt, **dadurch gekennzeichnet, daß** die OCR-Lesevorrichtung eine Einrichtung zur Ermittlung von Ähnlichkeiten von Bildern besitzt, welche Bilder der Absenderadressen der ermittelten, an die Absender zurückzuschickenden Sendungen erhält, daß bei Ermittlung eines festgelegten Ähnlichkeitsmaßes zwischen gespeicherten Bildmerkmalen des Gebietes mit den Absenderdaten einer der schon videocodierten Sendungen und den Bildmerkmalen einer neuen Sendung die neue Sendung der Codierung der videocodierten Sendung zugeordnet (80) wird und bei Nichterrreichen des festgelegten Ähnlichkeitsmaßes das betreffende Abbild der Absenderadresse der neuen Sendung über den Imagecontroller der Vorrichtung zur Videocodierung zugeführt wird und das Codierergebnis an die OCR-Lesevorrichtung zur Speicherung mit den zur Ahnlichkeitsanalyse herangezogenen Bildmerkmalen des Abbildes der Absenderadresse übertragen wird.

## Claims

1. Method for processing items of mail (1) which are to be sent back to the sender, with reception (20) and storage of the images of the despatch surfaces, which are provided with the distribution information, and determination (30) of at least those areas (2) which contain the sender address, **characterized in that** similarities of the areas which contain the sender addresses on the image plane are determined, **in that** only an image of one item of mail is video-coded from items of mail whose similarities in the address region images have a specific similarity measure, and the other items of mail of these items of mail are associated (80) with the determined sender.

2. Method according to Claim 1, **characterized in that** the similarities in the sender address images are determined by means of Mellin-Fourier-autocorrelation.

3. Method according to Claim 1 or 2, **characterized in that** the areas with the sender data on the items of mail from known major customers are video-coded before mail processing, and are stored in a return file together with determined features from the associated images, which are used for similarity analysis, and the return file is updated during the processing of the items of mail which are to be sent back to the sender.

4. Method according to one of Claims 1 to 3, **characterized in that** each item of mail which is to be sent back to the sender and whose sender address cannot be read uniquely automatically is checked to determine whether those features which are used for the similarity analysis in the image of the area which contains the sender data, with the corresponding stored features of the image of the area, which contains the sender data, of an item of mail whose sender address has already been video-coded have the defined similarity measure, and if this similarity measure is present, this item of mail is associated with the already video-coded sender address, and if the defined similarity measure is not present, this item of mail is likewise video-coded and those features which are used for the similarity analysis in the image of the area with the sender data are stored together with the result of the video coding.

5. Method according to Claims 1 to 4, in which the items of mail are given ID identifications and the images of the items of mail are stored under the associated ID identifications, **characterized in that** those features which are used for the similarity analysis in the area of the sender data are stored together with the result of the video coding under the respective ID identifications.

6. Apparatus for processing items of mail (1) which are to be sent back to the sender, using an apparatus for producing (20) and storing images of items of mail, an OCR scanner for automatic evaluation of the determination (30) of the areas of interest, such as the sender address, the recipient address, the return address markings, or stamps, on the basis of the stored images with result checks in a name and address databank and a return file, an apparatus for video coding of the images or of the areas of interest on the items of mail with result checks, which has at least one video coding location, an image controller for controlling the data flow between the OCR scanner and the apparatus for video coding which, if the sender addresses are not read unambiguously, supplies the corresponding images of the items of mail or only the corresponding sender address regions to the apparatus for video coding, and which supplies the video coding results for storage with the associated image from the OCR scanner, **characterized in that** the OCR scanner has a device for determining the similarities between images, which is provided with images of the sender addresses of the determined items of mail which are to be sent back to the sender **in that**, when determining a defined similarity measure between stored image features of the region with the sender data on one of the items of mail which has already been video-coded and the image features of a new item of mail, the new item of mail is associated (80) with the coding of the video-coded item of mail, and if the defined similarity measure is not achieved, the relevant image of the sender address for the new item of mail is supplied via the image controller to the apparatus for video coding, and the coding result is transmitted to the OCR scanner for storage with those image features which have been used for the similarity analysis in the image of the sender address.

## Revendications

1. Procédé pour traiter des envois (1) à renvoyer à l'expéditeur avec prise de vue (20) et stockage des représentations des surfaces d'envoi pourvues des informations de distribution et recherche (30) au moins des zones contenant l'adresse de l'expéditeur, **caractérisé en ce que** des similitudes des zones contenant l'adresse de l'expéditeur sont recherchées sur le plan de l'image de sorte que seule une représentation d'un envoi est codée par vidéo parmi les envois dont les similitudes des images de zones d'adresse présentent un niveau de similitude défini et que les autres de ces envois sont associés (80) à l'expéditeur recherché.

2. Procédé selon la revendication 1 **caractérisé en ce que** les similitudes des images d'adresses d'expéditeur sont recherchées à l'aide de l'auto-corrélation de Mellin-Fourier.

3. Procédé selon la revendication 1 ou 2 **caractérisé en ce que** les zones ayant les données d'expéditeur des envois des gros clients connus sont codées par vidéo avant le traitement des envois et que, conjointement avec les caractéristiques recherchées des images associées auxquelles on a recours pour l'analyse de similitude, elles sont stockées dans un fichier de renvoi qui est actualisé lors du traitement des envois à renvoyer à l'expéditeur.

4. Procédé selon l'une des revendications 1 à 3 **caractérisé en ce que** chaque envoi à renvoyer à l'expéditeur dont l'adresse d'expéditeur ne peut pas être clairement lue automatiquement est contrôlé pour savoir si les caractéristiques, auxquelles on a recours pour l'analyse de similitude, de la représentation de la zone contenant les données d'expéditeur présente le niveau de similitude défini avec les caractéristiques correspondantes enregistrées de la représentation de la zone contenant les informations d'expéditeur d'un envoi dont l'adresse d'expéditeur a déjà été codé par vidéo, si cette similitude existe, cet envoi est associé à l'adresse d'expéditeur déjà codée par vidéo et si le niveau de similitude n'existe pas, cet envoi est lui aussi codé par vidéo et les caractéristiques, auxquelles on a recours pour l'analyse de similitude, de la représentation de la zone avec les données d'expéditeur sont stockées conjointement avec le résultat du codage vidéo.

5. Procédé selon l'une des revendications 1 à 4 pour lequel les envois reçoivent des marques d'identification et les représentations des envois sont stockées sous les marques d'identification associées, **caractérisé en ce que** les caractéristiques, auxquelles on a recours pour l'analyse de similitude, de la zone des données d'expéditeur sont stockées conjointement avec le résultat du codage vidéo sous les marques d'identification correspondantes.

6. Dispositif pour traiter des envois (1) à renvoyer à l'expéditeur comprenant un dispositif pour produire (20) et pour stocker des représentations d'envoi, un dispositif de lecture optique de caractères pour analyser automatiquement la recherche (30) des zones intéressantes, comme l'adresse de l'expéditeur, l'adresse du destinataire, les indications de renvoi ou les tampons de renvoi à l'aide des représentations stockées avec des vérifications des résultats dans une banque de données d'adresses et de noms et dans un fichier de renvoi, un dispositif de codage vidéo des représentations ou des zones intéressantes des envois avec vérification des résultats qui présente au moins un emplacement de codage vidéo, un contrôleur d'images pour commander le flux de données entre le dispositif de lecture optique de caractères et le dispositif pour le codage vidéo qui, dans le cas d'adresses d'expéditeur qui ne sont pas clairement lues, transmet au dispositif de codage vidéo les représentations correspondantes des envois, ou seulement des zones d'adresse d'expéditeur correspondantes, et qui transmet les résultats du codage vidéo pour le stockage avec la représentation associée du dispositif de lecture optique **caractérisé en ce que** le dispositif de lecture optique de caractères possède une installation pour rechercher les similitudes des images, laquelle obtient des images des adresses d'expéditeur des envois recherchés à renvoyer à l'expéditeur de sorte que, lors de la recherche d'un niveau de similitude défini entre les caractéristiques d'images stockées de la zone avec les données d'expéditeur d'un des envois déjà codés par vidéo et avec les caractéristiques d'images d'un nouvel envoi, le nouvel envoi est associé (80) au codage de l'envoi codé par vidéo et, au cas où on n'atteint pas le niveau de similitude défini, la représentation concernée de l'adresse de l'expéditeur du nouvel envoi est transmise au dispositif de codage vidéo par l'intermédiaire du contrôleur d'images et le résultat de codage est transmis au dispositif de lecture optique de caractères pour le stockage avec les caractéristiques d'images, auxquelles on a recours pour l'analyse de similitude, de la représentation de l'adresse de l'expéditeur.
